# EUROPÄISCHE PATENTSCHRIFT

(11) **EP 1 236 158 B1**
(45) Veröffentlichungstag und Bekanntmachung des Hinweises auf die Patenterteilung: **18.05.2011**
(21) Anmeldenummer: 00990615.7
(22) Anmeldetag: 24.11.2000
(51) Int. Cl.: G06K 7/00

(54) **VERFAHREN ZUR DATENÜBERTRAGUNG ZWISCHEN MINDESTENS EINEM SCHREIB-LESE-GERÄT (SLG) UND MINDESTENS EINEM MOBILEN DATENSPEICHER (MDS) IN EINEM IDENTIFIKATIONSSYSTEM MIT LAUFZEITMESSUNG ZUR SELEKTION VON EMPFANGSDATEN**
METHOD FOR TRANSFERRING DATA BETWEEN AT LEAST ONE READ/WRITE DEVICE (SLG) AND AT LEAST ONE MOBILE DATA MEMORY (MDS) IN AN IDENTIFICATION SYSTEM, USING TRANSFER-TIME MEASUREMENT FOR SELECTING RECEIVED DATA
PROCEDE POUR LA TRANSMISSION DE DONNEES ENTRE AU MOINS UN APPAREIL DE LECTURE-ECRITURE ET AU MOINS UNE MEMOIRE DE DONNEES MOBILE DANS UN SYSTEME D'IDENTIFICATION AVEC MESURE DU TEMPS DE PARCOURS POUR LA SELECTION DE DONNEES DE RECEPTION

(30) Priorität: 09.12.1999 DE 29921462 U; 09.12.1999 EP 99124537
(43) Veröffentlichungstag der Anmeldung: 04.09.2002
(73) Patentinhaber: SIEMENS AKTIENGESELLSCHAFT, 80333 München (DE)
(72) Erfinder: SCHIEFER, Martin, A-3180 Lilienfeld (AT); VEITH, Peter-Ernst, A-1190 Wien (AT); KONRAD, Wolfgang, A-2340 Mödling (AT); Gila, Janos, 2340 Mödling (AT); Albert, Olaf, 1150 Wien (AT)
(86) Internationale Anmeldenummer: PCT/EP2000/011744
(87) Internationale Veröffentlichungsnummer: WO 2001/043054

(56) Entgegenhaltungen:
- EP-A- 0 638 871
- WO-A-98/16849

## Beschreibung

Die Erfindung betrifft ein Verfahren zur Datenübertragung mit den Merkmalen des Oberbegriffs des Patentanspruchs 1. Patentanspruch 5 gibt eine Verwendung des Verfahrens an. Patentanspruch 6 betrifft ein Schreib-Lese-Gerät zur Durchführung des Verfahrens. Patentanspruch 7 gibt ein Identifikationssystem mit einem solchen Schreib-Lese-Gerät und mit zumindest einem mobilen Datenspeicher an.

Als Stand der Technik sind Identifikationssysteme bekannt, die zumindest ein stationäres Schreib-Lese-Gerät (SLG) enthalten, welches Daten mit mobilen Datenträgern über eine in der Regel auf Funk basierende Datenübertragungsstrecke berührungslos austauscht. Derartige Systeme werden in technischen Einrichtungen eingesetzt, wo eine Vielzahl von Objekten bzw. Gütern möglichst schnell und frei zumindest bewegt werden müssen. Die Objekte können dabei unterschiedlichster Art sein, z.B. Pakete in einer Versandeinrichtung, Montageteile in einer Fertigungsanlage, Gepäckstücke in einem Transportsystem und vieles mehr. Dabei ist es in aller Regel erforderlich, an bestimmten Stellen der Einrichtung, z.B. einer Fertigungsanlage, etwa die Art und den Zustand der in einer räumlichen Nähe zu diesen Stellen aktuell befindlichen Objekte schnell und ungehindert zu erfassen. Hierzu werden einerseits die Objekte mit mobilen Datenspeichern versehen, welche z.B. die Art und den aktuellen Zustand des Objektes kennzeichnende Daten enthalten. Andererseits sind an den bestimmten Stellen der Einrichtung Schreib-Lese-Geräte platziert und häufig mit zentralen Datenverarbeitungseinrichtungen verbunden.

Aus der EP 0 638 871 A2 ist eine Vorrichtung zum Erfassen und Auslesen von relativ zu dieser Vorrichtung beweglichen mobilen Datenspeichern bekannt. Eine Leseeinheit weist zwei Phasenmodulatoren auf, von denen der eine im Sendezweig, der andere im Empfangszweig der Leseeinrichtung angeordnet ist. Die beiden Phasenmodulatoren bilden ein Laufzeitfilter. Von einem mobilen Datenspeicher reflektierte Empfangssignale werden nur dann ausgewertet, wenn die Summe der Laufzeiten des ausgesendeten HF-Signals und des zurück zur Lesevorrichtung reflektierten Signals etwa gleich der Verzögerung des dem zweiten Modulator zugeführten Modulatorsignals ist.

Aus der WO 98/16849 ist ein System zur Ortung einer Vielzahl von mobilen Datenspeichern bekannt, deren jeweilige Positionen mittels Triangulation über eine Vielzahl von räumlich verteilten Antennen eines "cell controller's" ermittelt werden kann.

Werden z.B. in einem Produktionsablauf solche Objekte in die räumliche Nähe einer ausgewählten Stelle befördert, so kann das dort angeordnete, stationäre Schreib-Lese-Gerät auf berührungslose Weise die Daten in den mobilen Datenspeichern der in ihrem Erfassungsbereich aktuell befindlichen Objekte erfassen und gegebenenfalls verändern. Die Daten können dann mit Hilfe einer übergeordneten zentralen Datenverarbeitungseinrichtung zu unterschiedlichen Zwecken ausgewertet werden, z.B. zur Verfolgung des Laufes der mit den mobilen Datenspeichern versehenen Objekte und zur davon abhängigen Steuerung von Betriebsmitteln der jeweiligen technischen Einrichtung.

In technischen Einrichtungen werden die mit mobilen Datenspeichern versehenen Objekte bzw. Güter in der Regel mit Hilfe von technischen Transportmitteln wie z.B. Förderbändern auf fest vorgegebenen Bahnen bewegt. Diese Transportmittel können eng aneinander bzw. übereinander liegend oder parallel verlaufen. Zur Erfassung des Flusses der Objekte auf den jeweiligen Bahnen können diesen Schreib-Lese-Geräte zugeordnet sein. Diese haben meist zur Überwachung und Steuerung des Objektflusses die Aufgabe, Daten mit den mobilen Datenspeichern an denjenigen Objekten auszutauschen, welche auf der zugeordneten Bahn bzw. dem zugeordneten Transportmittel gefördert werden.

Dabei kann das Problem auftreten, dass von einem Schreib-Lese-Gerät versehentlich Daten mit einem mobilen Datenspeicher an einem Objekt ausgetauscht werden, welches auf einer nicht zugeordneten, aber räumlichen benachbarten Bahn bewegt wird. Die Ursachen hierfür können vielfältig sein und z.B. in ungünstigen maschinenbaulichen Anordnungen, Überreichweiten, Reflexionseffekten und Positionsschwankungen der einzelnen Objekte auf der jeweiligen Bewegungsbahn liegen. Beim Einsatz von mobilen Datenspeichern z.B. zur Steuerung und Verfolgung von Gütern ist es somit in vielen Fällen zur Vermeidung von Fehlkommunikationen erforderlich, den Ort zugeordneter mobiler Datenspeichern eingrenzen zu können.

Zur Vermeidung derartiger Fehlkommunikationen sind unterschiedliche Methoden bekannt.

Bei einer ersten Methode wird hierzu der Erfassungsbereich bzw. die Kommunikationsreichweite der Schreib-Lese-Geräte eingeschränkt. Eine unerwünschte Kommunikation mit mobilen Datenspeichern z.B. auf einem benachbarten Fließband kann damit zwar verhindert werden. In der Praxis hat aber eine derartige Begrenzung des Erfassungsbereichs auch eine starke Eingrenzung der Einsatzmöglichkeiten eines solchen Identifikationssystems zur Folge. Vielfach ist es in Praxis auf diese Weise auch nicht mit hinreichender Sicherheit möglich, eine Unterscheidung von mobilen Datenspeichern zu erreichen. Der Grund hierfür liegt einerseits an der Breite z.B. von Fließbändern. Diese erfordern auch ausreichende große Kommunikationsreichweite von Schreib-Lese-Geräten, um mit Sicherheit auch auf dem Förderband ungünstig platzierte und schnell aufeinander folgende Objekte und deren mobile Datenspeicher identifizieren zu können. Andererseits sind in Produktionsanlagen Förderbänder häufig so eng platziert, dass ein Übersprechen der Kommunikationsreichweite von Schreib-Lese-Geräten an einem Förderband auf ein benachbartes Förderband kaum vermeidbar ist.

Bei einer zweiten Methode wird zwar die Kommunikationsreichweite der Schreib-Lese-Geräten nicht beschränkt. In den einzelnen mobilen Datenspeichern werden aber zusätzliche Statusinformationen vorrätig gehalten. Hierdurch kann erreicht werden, dass die Kommunikation zwischen einem Schreib-Lese-Gerät und mobilen Datenspeichern nur in einer festen Reihenfolge abläuft. Derartige mobile Datenspeicher sind aber nicht universell einsetzbar. Ferner sind trotzdem zusätzliche physikalische Maßnahmen zum Schutz vor Überreichweiten erforderlich, insbesondere am Anfang eines Datenaustauschs.

Bei einer weiteren Methode wird die Kommunikationsreichweite von Schreib-Lese-Geräten ebenfalls nicht beschränkt. Durch eine Messung der Signalpegel der von mobilen Datenspeichern abgesendeten Datenströme wird eine Abschätzung von deren Entfernung von dem jeweiligen Schreib-Lese-Gerät vorgenommen. Hiermit kann entschieden werden, ob ein Datenstrom von einem zugeordneten oder fremden mobilen Datenspeicher stammt. Dieses Verfahren hat aber den besonderen Nachteil, dass es in geschlossenen Räumen, wie z.B. in Fabrikhallen, d.h. bei sogenannten "indoor" Applikationen, nicht eingesetzt werden kann. Der Grund hierfür liegt darin, dass in Gebäuden aufgrund von Mehrfachreflexionen sehr starke Schwankungen in der Empfangsfeldstärke auftreten können. Eine Ermittlung der Reichweiten durch Auswertung von Signalpegeln ist daher mit einem zu großen Fehler behaftet.

Der Erfindung liegt die Aufgabe zugrunde, ein im Vergleich zum Stand der Technik einfacheres Verfahren zur Datenübertragung zwischen mindestens einem Schreib-Lese-Gerät und mindestens einem mobilen Datenspeicher anzugeben.

Die Aufgabe der Erfindung wird durch die kennzeichnenden Merkmale des Patentanspruchs 1 gelöst. Vorteilhafte Verfahrensvarianten werden in den Unteransprüchen 2 - 4 beschrieben. Gemäß Patentanspruch 6 wird die Aufgabe weiterhin durch ein Schreib-Lese-Gerät mit Sende- und Empfangsmitteln zur Durchführung des Verfahrens gelöst. Weiterhin wird die Aufgabe der Erfindung gelöst durch ein Identifikationssystem nach Patentanspruch 7 mit einem solchen Schreib-Lese-Gerät und mit zumindest einem mobilen Datenspeicher. Das Verfahren kann nach Patentanspruch 5 zur Erfassung von objektbezogenen Zustands- und/oder Prozessdaten z.B. in einem Versand-, Transport- und/oder Fertigungssystem der einzelnen Objekte verwendet werden.

Erfindungsgemäß erfolgt eine Phasensynchronisation im Schreib-Lese-Gerät, wenn eine Fangbereichszeit, welche der Laufzeit des Datensignals vom Schreib-Lese-Gerät zu einem benachbarten mobilen Datenspeicher und zurück entspricht, kürzer ist als die Länge eines gerasterten Zeitschlitzes. Die Verarbeitung des empfangenen modulierten Datensignals erfolgt nach erfolgter Phasensynchronisation.

Somit kann außerhalb eines vorgegebenen Reichweitenbereichs aufgrund fehlender Phasensynchronisation das empfangene Datensignal nicht weiterverarbeitet werden.

Weitere Einzelheiten der einzelnen Verfahrensvarianten ergeben sich aus im folgenden näher erläuterten Ausführungsbeispielen sowie im Zusammenhang mit den Zeichnungsfiguren. Es zeigen:
- FIG 1: eine schematische Darstellung eines Schreib-Lese- Geräts mit mobilen Datenspeichern in unterschiedli- chen Entfernungen sowie
- FIG 2: eine schematische Darstellung erfasster und nicht er- fasster Datensignale von mobilen Datenspeichern.

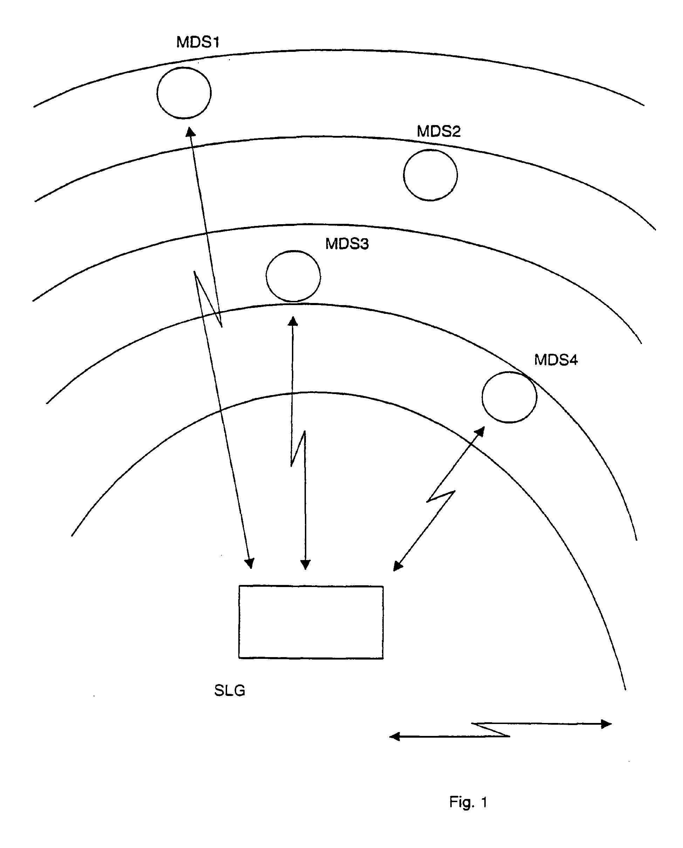

FIG 1 zeigt in unterschiedlichen Abständen vom Schreib-Lese-Gerät SLG angeordnete mobile Datenspeicher MDS 1 - 4, welche mit dem Schreib-Lese-Gerät SLG zur Datenübertragung über Funksignale kommunizieren.

Das erfindungsgemäße Verfahren ermöglicht es, dass von mobilen Datenspeichern MDS rückgesendete Datensignale nur dann im Schreib-Lese-Gerät SLG empfangen und weiterverarbeitet werden, wenn sich die jeweiligen mobilen Datenspeicher MDS innerhalb eines vorgegebenen maximalen Abstands zum Schreib-Lese-Gerät SLG oder in einem vorgegebenen Entfernungsbereich zum Schreib-Lese-Gerät SLG befinden.

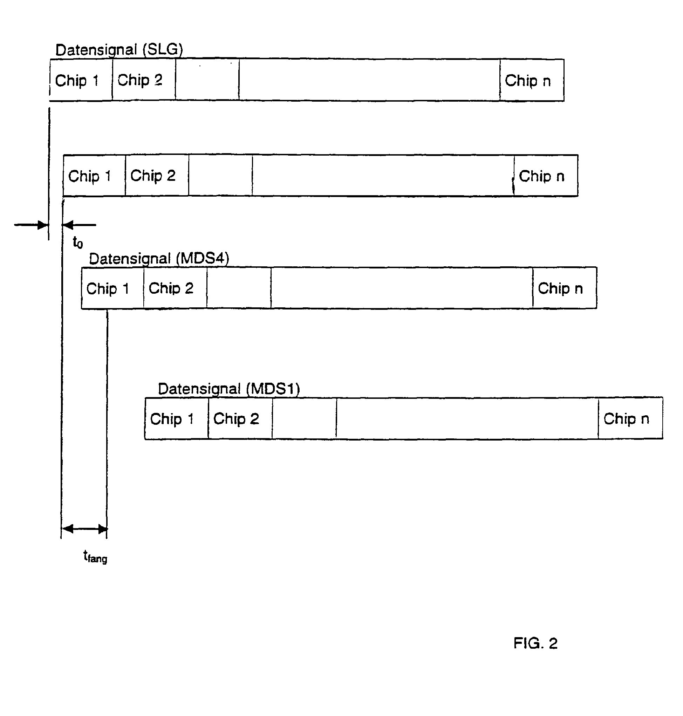

Gemäß dem erfindungsgemäßen Verfahren werden vom Schreib-Lese-Gerät SLG modulierte Datensignale an die in der Umgebung befindlichen mobilen Datenspeicher MDS ausgesendet. Diese modulierten Datensignale des Schreib-Lese-Geräts SLG werden von mobilen Datenspeicher MDS empfangen und innerhalb der Bearbeitungszeit t₀ (vgl. FIG 2) verarbeitet. Die Verarbeitungszeit ist im Falle einer Backscatter-Modulation 0. Dann wird ein moduliertes Datensignal vom jeweiligen mobilen Datenspeicher MDS an das Schreib-Lese-Gerät SLG zurückgesendet.

Derartige von mobilen Datenspeichern MDS empfangene Datensignale des Schreib-Lese-Geräts SLG werden durch passive Backscatter-Modulation ohne weitere Bearbeitungszeit innerhalb des mobilen Datenspeichers MDS an das Schreib-Lese-Gerät SLG zurückgesendet.

Beim Schreib-Lese-Gerät SLG treffen nun auch Datensignale ein, die von fremden oder zu weit beabstandeten mobilen Datenspeichern MDS ausgesendet wurden und welche im Schreib-Lese-Gerät SLG vom weiteren Signalverarbeitungsprozess auszuschließen sind.

Vorteilhafterweise werden Spread-Spectrum-Datensignale zwischen Schreib-Lese-Gerät SLG und den mobilen Datenspeichern MDS übertragen und ausgetauscht.

Es kann festgestellt werden, ob zwischen den Datensignalen des Schreib-Lese-Geräts SLG und den empfangenen Datensignalen des mobilen Datenspeichers MDS eine Phasensynchronisation besteht. Diese liegt vor, wenn die Summe der Laufzeit des Datensignals vom Schreib-Lese-Gerät SLG zu einem benachbarten mobilen Datenspeicher MDS und einer Bearbeitungszeit t₀ =0 zur Erzeugung des rückzusendenden Datensignals im mobilen Datenspeicher MDS und der Laufzeit des rückgesendeten Datensignals vom mobilen Datenspeicher MDS zum Schreib-Lese-Gerät SLG kürzer ist als die Länge eines Signalchips, also eines Zeitschlitzes im zeitgerasterten Datenstrom aufeinanderfolgender Datensignale des Schreib-Lese-Geräts SLG.

Wenn nun ein vom mobilen Datenspeicher MDS zurückgesendetes Datensignal innerhalb der Summe von Bearbeitungszeit t₀ =0 und der Fangbereichszeit t_{fang} (also der maximalen Übertragungszeit vom Schreib-Lese-Gerät SLG zum mobilen Datenspeicher MDS und zurück) wieder im Schreib-Lese-Gerät SLG empfangen wird, befindet sich das zurückgesendete Datensignal des mobilen Datenspeichers MDS innerhalb des vorgegebenen Reichweitenbereichs.

In der schematischen Darstellung gemäß FIG 2 befindet sich das zurückgesendete Datensignal des mobilen Datenspeichers MDS 4 innerhalb des aus der Summe von to =0 und t_{fang} gebildeten Zeitfensters, während das Datensignal MDS 1 außerhalb des vorgegebenen Reichweitenbereichs liegt und im Schreib-Lese-Gerät SLG aufgrund fehlender Phasensynchronisation nicht mehr weiterverarbeitet wird.

Bei einer Vernachlässigung der Bearbeitungszeit t₀ =0 ergibt sich die maximale zeitliche Chiplänge des Zeitschlitzes im gerasterten Datensignal des Schreib-Lese-Geräts SLG aus der Reichweite des Schreib-Lese-Geräts SLG zum mobilen Datenspeicher MDS und zurück dividiert durch die Ausbreitungsgeschwindigkeit der elektromagnetischen Wellen, also die Lichtgeschwindigkeit.

Im Schreib-Lese-Gerät SLG wird die Phase des im mobilen Datenspeicher MDS mit einem Hilfsträger modulierten und rückgesendeten Datensignals am Anfang und am Ende eines Zeitschlitzes des gerasterten Datenstroms des Schreib-Lese-Geräts SLG festgestellt. Eine ermittelte Phasendifferenz in Bezug zum ausgesendeten Datensignal des Schreib-Lese-Geräts SLG ist proportional zum Abstand zwischen dem Schreib-Lese-Gerät SLG und dem mobilen Datenspeicher MDS, dessen rückgesendetes Datensignal empfangen wurde. Diese Phasendifferenzen werden mehrfach ermittelt und dann gemittelt.

Bei einer als Grenzwert im Schreib-Lese-Gerät SLG vorgegebenen maximalen Phasendifferenz können rückgesendete Datensignale von mobilen Datenspeichern MDS, welche diesen Phasengrenzwert überschreiten, von einer weiteren Signalverarbeitung im Schreib-Lese-Gerät SLG ausgeschlossen werden.

## Patentansprüche

1. Verfahren zur Datenübertragung zwischen mindestens einem Schreib-Lese-Gerät (SLG) und mindestens einem mobilen Datenspeicher (MDS) in einem Identifikationssystem mit mindestens einem an Objekten angebrachten mobilen Datenspeicher (MDS) mittels einer passiven Backscattermodulation, mit zumindest folgenden Verfahrenschritten:
a) Aussendung eines modulierten und in Zeitschlitzen gerasterten Datensignals vom Schreib-Lese-Gerät (SLG) an mindestens einen mobilen Datenspeicher (MDS),
b) Rücksendung des modulierten Datensignals von mindestens einem mobilen Datenspeicher (MDS) zum Schreib-Lese-Gerät (SLG),
c) Messung einer Phasenverschiebung zwischen dem gesendetem und empfangenen modulierten Datensignal im Schreib-Lese-Gerät (SLG),
**gekennzeichnet durch**
d) eine Phasensynchronisation im Schreib-Lese-Gerät (SLG), wenn eine Fangbereichszeit (t_{fang}), welche der Laufzeit des Datensignals vom Schreib-Lese-Gerät (SLG) zu einem benachbarten mobilen Datenspeicher (MDS) und zurück entspricht, kürzer ist als die Länge eines gerasterten Zeitschlitzes, und
e) Verarbeitung des empfangenen modulierten Datensignals nach erfolgter Phasensynchronisation.

2. Verfahren nach Anspruch 1,
**dadurch gekennzeichnet, dass** die Aussendung eines Datensignals vom Schreib-Lese-Gerät (SLG) an mindestens einen mobilen Datenspeicher (MDS) in einem bestimmten Zeitschlitz erfolgt.

3. Verfahren nach Anspruch 1 oder 2,
**dadurch gekennzeichnet, dass** vom Schreib-Lese-Gerät (SLG) ein Spread-Spectrum-Datensignal an mindestens einen mobilen Datenspeicher (MDS) ausgesendet wird.

4. Verfahren nach Anspruch 3,
**dadurch gekennzeichnet, dass** von mindestens einem mobilen Datenspeicher (MDS) ein Spread-Spectrum-Datensignal empfangen und zurück an das Schreib-Lese-Gerät (SLG) gesendet wird.

5. Verwendung des Verfahrens nach einem der vorangegangenen Ansprüche zur Erfassung von objektbezogenen Zustands-und/oder Prozessdaten z.B. in einem Versand-, Transport-und/oder Fertigungssystem der einzelnen Objekte.

6. Schreib-Lese-Gerät (SLG) mit Sende- und Empfangsmittel zur Durchführung des Verfahrens nach einem der vorangegangenen Ansprüche 1 bis 4.

7. Identifikationssystem mit einem Schreib-Lesegerät (SLG) nach Anspruch 6 und mindestens einem mobilen Datenspeicher (MDS).

## Claims

1. Method for transferring data between at least one read/write device (SLG) and at least one mobile data memory (MDS) in an identification system comprising at least one mobile data memory (MDS) attached to objects, by means of a passive back scatter modulation, comprising at least the following method steps:
a) sending out a modulated data signal rastered in time slots from the read/write device (SLG) to at least one mobile data memory (MDS),
b) sending back the modulated data signal from at least one mobile data memory (MDS) to the read/write device (SLG),
c) measuring a phase shift between the transmitted and received modulated data signal in the read/write device (SLG), **characterized by**
d) a phase synchronization in the read/write device (SLG) when a capture range time (t_{fang}), which corresponds to the transit time of the data signal from the read/write device (SLG) to an adjacent mobile data memory (MDS), and back is shorter than the length of a rastered time slot, and
e) processing of the received modulated data signal after completed phase synchronization.

2. Method according to Claim 1, **characterized in that** the sending out of a data signal from the read/write device (SLG) to at least one mobile data memory (MDS) occurs in a particular time slot.

3. Method according to Claim 1 or 2, **characterized in that** the read/write device (SLG) sends out a spread-spectrum data signal to at least one mobile data memory (MDS).

4. Method according to Claim 3, **characterized in that** a spread-spectrum data signal is received and sent back to the read/write device (SLG) by at least one mobile data memory (MDS).

5. Using the method according to one of the preceding claims for acquiring object-related status and/or process data, e.g. in a despatch, transport and/or production system of the individual objects.

6. Read/write device (SLG) comprising transmitting and receiving means for carrying out the method according to one of the preceding Claims 1 to 4.

7. Identification system comprising a read/write device (SLG) according to Claim 6 and at least one mobile data memory (MDS).

## Revendications

1. Procédé de transmission de données entre au moins un appareil ( SLG ) d'écriture-lecture et au moins une mémoire ( MDS ) de données mobile dans un système d'identification ayant au moins une mémoire ( MDS ) de données mobile mise sur des objets au moyen d'une modulation passive par rétrodiffusion, comprenant au moins les stades de procédés suivants :
a) envoi d'un signal de données modulé et tramé en créneaux temporels par l'appareil ( SLG ) d'écriture-lecture à au moins une mémoire ( MDS ) de données mobile,
b) renvoi du signal de données modulé par au moins une mémoire ( MDS ) de données mobile à l'appareil ( SLG ) d'écriture-lecture,
c) mesure d'un déphasage dans l'appareil ( SLG ) d'écriture-lecture entre les signaux de données modulés émis et reçu, **caractérisé par**
d) une synchronisation de phase dans l'appareil ( SLG ) d'écriture-lecture, si un temps ( tfang ) de plage de capture, qui correspond à la durée de parcours du signal de données de l'appareil ( SLG ) d'écriture-lecture à une mémoire ( MDS ) de données mobile voisine et retour est plus court que la longueur d'un créneau temporel tramé, et
e) traitement du signal de données modulé reçu après avoir effectué la synchronisation de phase.

2. Procédé suivant la revendication 1,
**caractérisé en ce qu'**on effectue l'émission d'un signal de données de l'appareil ( SLG ) d'écriture-lecture à au moins une mémoire ( MDS ) de données mobile dans un créneau temporel déterminé.

3. Procédé suivant la revendication 1 ou 2,
**caractérisé en ce que** l'on envoie un signal de données à spectre étalé de l'appareil ( SLG ) d'écriture-lecture à au moins une mémoire ( MDS ) de données mobile.

4. Procédé suivant la revendication 3,
**caractérisé en ce que** l'on reçoit un signal de données à spectre étalé par la au moins une mémoire ( MDS ) de données mobile et on le renvoie à l'appareil ( SLG ) d'écriture-lecture.

5. Utilisation du procédé suivant l'une des revendications précédentes, pour la détection de données d'état se rapportant à un objet et/ou de processus, par exemple dans un système d'expédition, de transport et/ou de fabrication des objets.

6. Appareil ( SLG ) d'écriture-écriture comprenant des moyens d'émission pour effectuer le procédé suivant l'une des revendications précédentes 1 à 4.

7. Système d'identification comprenant un appareil ( SLG ) d'écriture-lecture suivant la revendication 6 et au moins une mémoire ( MDS ) de données mobile.
